# EUROPEAN PATENT APPLICATION

(11) **EP 3 783 591 A1**
(43) Date of publication of application: **24.02.2021**
(21) Application number: 18740882.8
(22) Date of filing: 16.04.2018
(51) Int. Cl.: G09F 9/30, G02B 27/22, G09F 19/18, G06Q 30/06

(54) **MODEL DEVICE FOR COMMERCIAL ESTABLISHMENTS**

(71) Applicant: Lightsound Business, S.L., 08018 Barcelona (ES)
(72) Inventor: BOJA PASTOR, David Boris, 08018 BARCELONA (ES)
(74) Representative: Durán-Corretjer, S.L.P.
(86) International application number: PCT/ES2018/070306
(87) International publication number: WO 2019/202174

(57) **Abstract**

Model device for commercial establishments, of the type that comprises a device of the holographic type and a user interface, the device of the holographic type and the interface being connected together, in which the device comprises a source of visible light connected to a control device for emitting a holographic recording, the source of visible light having a luminosity of between 350 and 8000 cd/m² and a pixel pitch less than 6 mm, which emits to a screen that is both transparent and reflective located obliquely relative to the light source, and in that the control device is connected to the interface, in such a way that the holographic recording to be emitted is selected as a function of a command sent from the user interface.

## Description

The present invention relates to a model device for commercial establishments.

It is known from the world of sales that our purchasing decision processes are not completely rational, but are stimulated or hindered by certain conditions of the surroundings, such as lighting, the sound environment, etc. For example, it is known that the purchasing process may be stimulated by the recommendation of a third party, especially if this third party is known or, even better, is famous. It is also known that, for the case of articles of clothing, the purchasing process is promoted when we see the garment in question worn by a third party, especially if this third party is beautiful or attractive according to current beauty standards. Seeing the garment on a model promotes a purchase much more than simply trying the garment on, even when the customer tries on the garment after seeing the garment on the model, and is aware of the difference in adjustment of the garment in his or her case, in comparison with that of a model.

That is why the fashion industry stages fashion shows. In commercial establishments or shops, mannequins are used. Mannequins consist of a humanoid figure that can be dressed in a garment or a combination of garments. Mannequins have been known at least since the year 1350 B.C., based on the discovery of a wooden torso in the tomb of King Tutankhamun, although the outburst in their use occurred with the industrial revolution and, more specifically, from the year 1870, along with the promotion and extension of commercial activity to broader strata of the population. Starting from the 20th century, there were attempts to make mannequins more realistic, as it was found that this increased sales.

Despite their success, mannequins have the drawback that they can only show one combination of garments. Therefore the combinations shown are reduced to just those that are thought, a priori, to be more likely to be successful. This limitation leads to loss of potential sales.

On the other hand, solutions are known based on a user interface that allow garments to be combined, which are usually called virtual fitting rooms. The user can enter his or her measurements. Based on the measurements, the control device generates a 3D virtual mannequin. Then the user can choose garments and the control device places them on the virtual mannequin. The result is shown on a 2D screen. There are two reasons why solutions of this type are inefficient. The first, and the most important, is that as there is no appreciable effect of reality, there is no particular stimulus for making a purchase. The second reason, which is secondary but also important, is that the user's own deviations from accepted notions of beauty standards discourage a purchase. It has been verified that the motivation to buy is greater when the garment is worn by a third party.

The use of tactile screens with similar solutions in commercial establishments and shops is also known. They too do not produce a particular motivation for purchase: the result is a 2D image that does not produce an adequate motivating effect.

The use of similar solutions in commercial establishments that involve some type of holographic technique for motivating to purchase is also known. Thus, the use of a tactile window display is known that also includes a screen and a back projector that shows a recording using holographic or 3D techniques. However, this effect proves inadequate, since the sensation, despite giving some impression of three dimensions, is not real. Moreover, this technique does not work in surroundings with strong lighting or where there is direct or indirect sunlight.

In general, the known holographic techniques do not appear to be suitable for use in a commercial establishment or shop environment. In particular, the holographic technique is required to produce an effect of reality (therefore, for example, laser holography is rejected) and moreover, the hologram must be able to be shown in the changing and poorly controlled lighting conditions of a commercial establishment.

One aim of the present invention is to disclose technical means that allow the aforementioned limitations to be overcome.

More particularly, the present invention discloses a model device for commercial establishments, of the type that comprises a device of the holographic type and a user interface, the holographic device and the interface being connected together, wherein the device comprises a source of visible light connected to a control device for emitting a holographic recording, the source of visible light preferably having a luminosity of between 250 and 8000 cd/m² and a pixel pitch (sometimes called pixel size or distance between pixels) preferably less than 7 mm, which emits to a screen that is both transparent and reflective located obliquely relative to the light source, and wherein the control device is connected to the interface, in such a way that the holographic recording to be emitted is selected as a function of a command sent from the user interface.

The present invention obtains the required result by means of a holographic technique that uses a light source, which may be conventional, and a holographic screen or skin, i.e. an element that combines transparency and reflectance and that is placed obliquely with respect to the light source, receiving a digital emission of the holographic type. This provides various effects:
- Being able to use a light source of the conventional type allows the luminosity to be adjusted to the luminosity that exists in the commercial establishment.
- The use of a holographic screen or skin that is simultaneously transparent and reflective allows the positioning of three-dimensional elements behind the holographic screen or skin. The recording can interact with the elements located behind the holographic skin, increasing the sensation of reality.
- Moreover, the use of an oblique holographic screen or skin provides an enhanced sensation of reality, since the screen is not near the user.
- The solution allows the use of colour, with sufficient resolution, and it can be implemented at real size.

The emission is a recording made by holographic techniques of a known type, which provides a sensation of three-dimensionality that is not limited to a single viewing angle. Moreover, the recording can have been distorted to compensate for the oblique position of the holographic skin.

Preferably, the holographic screen or skin is positioned at an angle of between 20º and 70º relative to the direction of projection of the holographic recording, and more preferably at 45º. Since the positioning of the light source is preferably zenithal, the preferred positioning of the holographic skin is 45º relative to the vertical and/or relative to the user. The light source may also be positioned on the floor and the holographic skin at 45º from this.

Preferably, the holographic screen or skin is a colourless or coloured glass panel, one face of which is covered with a transparent layer of metal oxides. The transparent layer of metal oxides provides reflectivity without compromising transparency. Preferably, the transparent layer is located on the side opposite the user interface, since the colours of the emission are enhanced in this way. More preferably, the thickness of the screen is between 3.5 and 12 mm.

Preferably, the luminosity is greater than 350 cd/m². More preferably, the luminosity of the light source is greater than 1500 cd/m². This gives a sensation of reality in all types of environments. In general, the luminosity required will be greater, the greater the luminosity of the commercial establishment.

In general, the light source may be a conventional projector.

According to the present invention, the use of LED screens is preferred, giving solutions of suitable precision, luminosity, small size and low cost.

Preferably, the pixel pitch is less than or equal to 6 mm. Preferably the light source has a pixel pitch greater than or equal to 0.25 mm, and more preferably the pixel pitch is between 3 and 2 mm. This resolution is optimally suitable for solutions at real size.

Preferably, the device comprises a box in which the screen is located, leaving at least one side of the box open that faces the user interface. Two effects are obtained in this way. Firstly, the holographic skin can be isolated from the rest of the surroundings, and in particular from variations of luminosity thereof. Secondly, it makes it possible to reduce and/or control the luminosity behind the holographic skin, enhancing the holographic effect. As already mentioned, also preferably, the box has three-dimensional decorative elements, with the screen in an intermediate position between the three-dimensional decorative elements and the user interface.

Preferably, if we wish to use the device to emit a full-size model, the dimensions of the box are at least 200 cm high by 150 cm wide. Optimum dimensions in this case are, at most, 300 cm high, 250 cm wide and 250 cm deep.

Preferably, the user interface is a touch screen. Said touch screen may be a specifically dedicated device or may be incorporated in a shop window display, for example by known techniques.

As already mentioned, a special application of the present invention is as an improvement of the existing mannequins. For said application, the user interface preferably comprises a selector module configured to allow the user to select a combination of articles of clothing from the selection of individual garments, selection of the combination generating a command for emission of a holographic recording comprising the emission of a model wearing the aforementioned combination of garments.

Other solutions are also possible, for example the user interface may comprise a product to be sold and a sensor of the presence of the product, the interface being configured in such a way that detection or non-detection of said product generates a command for emission of a holographic recording. In this case the holographic recording may be of any type. For example, a celebrity may quote the advantages of the product selected, or an emission with a powerful message may be emitted, without the need for intervention of personages or anthropomorphic elements. The presence sensor may be of any type, for example RFID or NFC. Alternatively, a device for detecting gestural interaction may be used.

The present invention also provides communications solutions that make the product flexible to programe and configure in commercial establishments environments, including commercial establishments belonging to a chain of commercial establishments. For this, the device is preferably connected remotely to a hologram server that comprises the holographic recordings to be emitted, said recordings being sent in response to a command from the device. Even more preferably, the device is connected remotely to a product server that supplies data on selectable products to the user interface. The communications arrangements envisaged in the present invention are applicable to any device with a user interface located in a commercial establishment.

In short, the present invention offers an interactive system that offers the audience the act of purchasing, fashion advice, music, videos, as well as the possibility of interacting in the space where they are located at this precise moment. The present invention comprises solutions that are applicable both indoors and in the open air. Particular embodiments of the present invention allow the user, via a touch-sensitive display, to select desired combinations of garments, so that a model that appears in the holographic emission shows them in real time.

In an especially preferred particular embodiment, the device comprises a facial recognition device for the purpose of determining the most suitable garments for each customer. The facial recognition device does not need to recognize the whole face. It may simply detect certain points, from which it is possible to determine features that may be related to the usual features of sex, age range and emotions.

Once the desired items have been selected, the user will be able to place an order for purchase, for example by means of a QR code that appears on the display and is scanned with his mobile device, thus guaranteeing complete privacy in the action of purchasing.

The present invention is preferably applicable to retail establishments. It is also especially applicable for the promotion and marketing of entertainment products and museum products.

For better understanding, some drawings of an embodiment of the device according to the present invention are appended, as an explanatory but non-limiting example.
Fig. 1 shows a perspective view of an exemplary embodiment of a device according to the present invention.
Fig. 2 shows a side view, sectioned through a mid-plane, of the box of the embodiment in Fig. 1.
Fig. 3 shows a front view of another exemplary embodiment of the invention, in which the user interface has been incorporated in a shop window display.
Fig. 4 shows a perspective view of an alternative embodiment of a device according to the present invention.
Fig. 5 shows a detail view of a projector in the form of an LED screen usable as a light source in a device according to the present invention.
Fig. 6 shows a communications scheme applicable to a device according to the present invention.

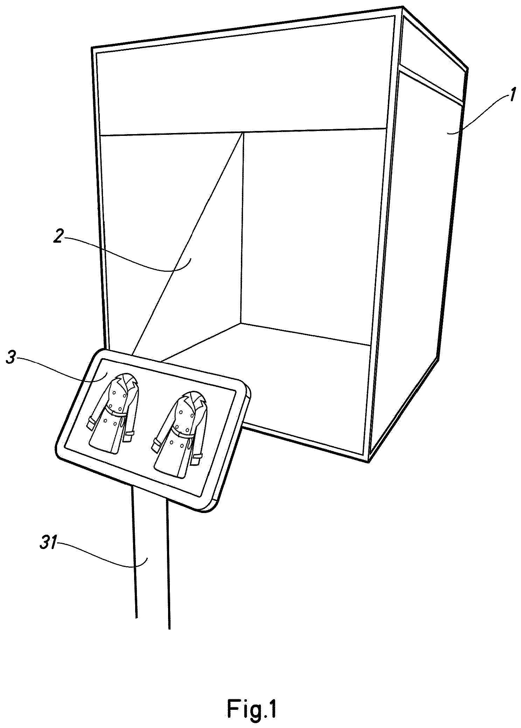

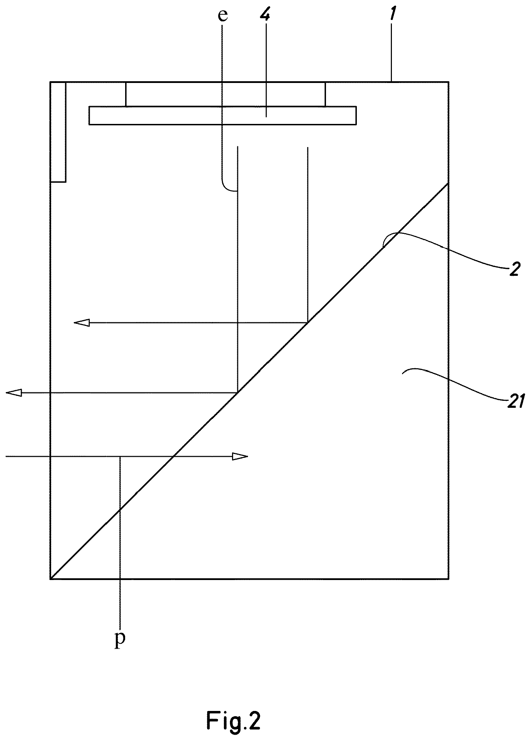

Figs. 1 and 2 show an exemplary embodiment of a device according to the present invention based on a user interface that comprises a touch screen -3- on a pedestal -31-. Opposite the user interface -3-, there is an open box -1-, which comprises the projector -4- and a holographic screen or skin -2-, which receives and reflects the emission from the projector -4-, but also allows the user located in front of the touch screen to see elements located in the zone -21- behind the holographic skin -2-.

The box -1- in the example has dimensions of 3 metres high, 2.5 metres wide and 2.5 metres deep. The box -1- in the example is closed on all five faces except face -11-, facing the touch screen -3-. Other configurations are also possible. In particular, depending on the lighting of the commercial establishment in which the device is located, more faces of the box may be open. The box -1- may also be dispensed with, in certain applications. Regarding the dimensions of the box -1-, these may be scalable to the size that is required. Certainly, with larger size, greater interactivity and realism may be found in the holograms. A larger size allows several objects to interact in the same device.

The holographic screen or skin -2- in the example is high-gamma glass. The high quality of the glass makes it possible to provide brightness and clarity for the holographic contents.

In particular, the holographic skin -2- in the example is a reflective glass consisting of a float glass panel, colourless or coloured (preferably of bronze, grey, green or dark blue colour). One of the faces of the holographic skin -2- has been coated with a thin transparent layer of metal oxides by a pyrolytic process. Said layer may be placed on the outer layer of the glass (i.e. the face that faces the user interface) or inside. However, its position determines both the tonality of the glazing and its technical properties. When the layer is located towards the exterior, the colour of the glazing is enhanced. Glass of this grade is made in thicknesses from 6 to 12 mm, some models also in 3.5 x 5 m. Glazing of this type is usually manufactured in dimensions of up to 6 x 3.21 m as standard.

Regarding arrangement, ideally the holographic skin -2- should be placed at 45º relative to the projector -4- (as can be seen in Fig. 2). However, deviations of said angle of 30% on both axes are admissible. Said deviations may be compensated by techniques of distorting the image emitted.

The holographic skin does not have to be glass; although this is ideal, it may be any element that simultaneously can be seen through (-p-) and has reflective properties (-e-). It is preferable for the transparency and reflectivity to be at a maximum simultaneously.

The purpose of the holographic skin is to reflect the emission from the projector -4-, but be transparent. To increase the sensation of reality, real objects may be placed in the zone -21- behind the holographic skin. The holographic emission can appear to interact with the objects in said zone -21-. For example, a wooden walkway may be placed in zone -21- and the emission may consist of a model that appears to walk along the walkway. The objects in zone -21- behind the holographic skin may be illuminated by lamps in order to equalize their luminosity with that of the emission reflected in the holographic skin -2-, which increases the sensation of reality.

In the embodiment shown, the user can choose, via the touch screen -3-, various garments that form a set. Next, the projector -4- emits a holographic emission that represents a model that is dressed in the selected garments. Preferably, the projected image interacts with elements located in zone -21- behind the holographic skin -2-. It may also interact with the user, for example by talking to him or her. For this purpose, the device may have loudspeakers located near the holographic skin -2-, or in the box -1-.

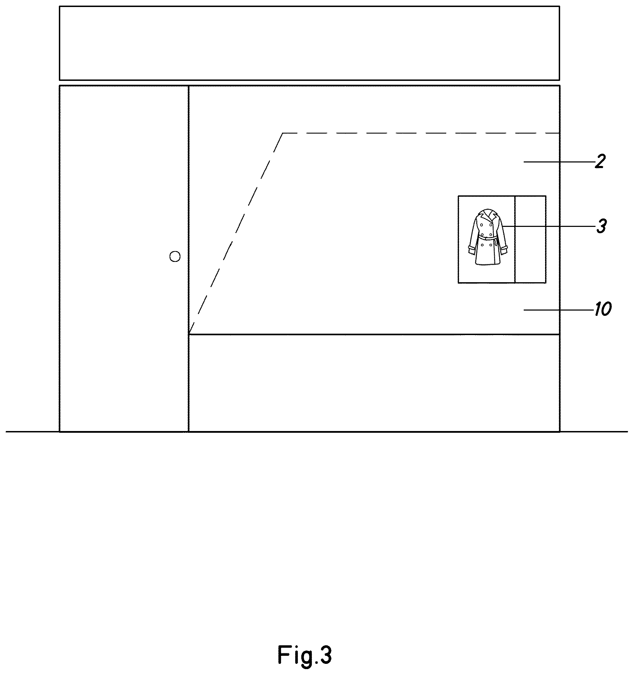

Fig. 3 shows another embodiment of a device according to the present invention. Elements that are the same as or similar to those of the preceding embodiment are represented with identical numerals. This embodiment is similar to the preceding embodiment, differing essentially from the preceding embodiment in that the touch screen -3- is incorporated in the glazing of a window display, or of a commercial establishment or shop. This may be achieved by known techniques. For example, with touch-sensitive vinyl that is glued to the glass of a window display. Accordingly, the holographic skin -2- is located in the space located behind the glass in the window display. In this case, the box -1-, if necessary, can be provided by the actual walls of the window display.

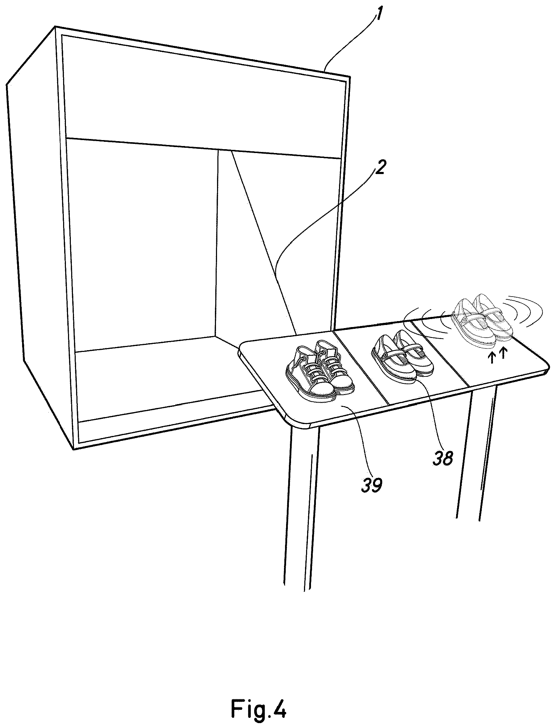

Fig. 4 shows another different embodiment in which the user interface consists of a display case -39- with commercial products -38- (in this case, shoes). When the user raises the product, a presence sensor (for example an RFID sensor) detects the movement of the product -38- and orders the emission of a hologram relevant to said product.

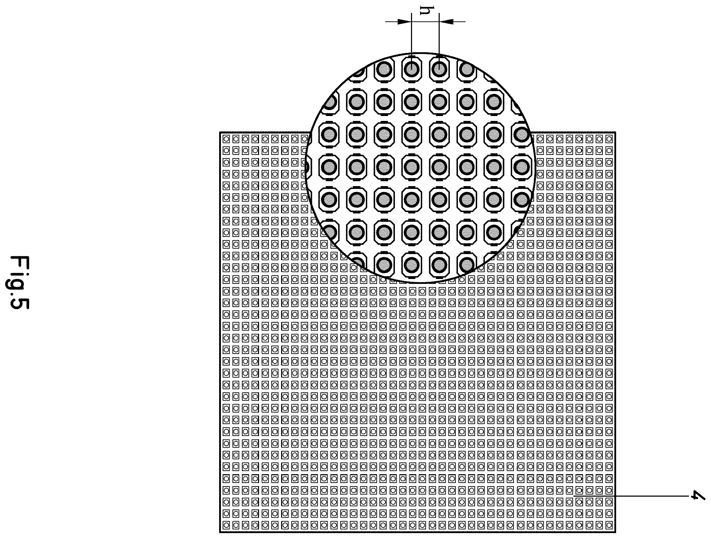

Regarding the projector -4-, it may be any type of source of visible light. Preferably, it is an LED screen, preferably an LED screen with high resolution and high brightness. These screens guarantee maximum commercially available image clarity. The present applicant found that the possible range of pixel density in LED screens varies between a pixel pitch of 6 mm and a minimum of 0.25 mm. However, the optimum range for the present invention varies between 2 and 3 mm. The optical luminous intensity of the light source largely depends on the lighting of the space in which the device is located. The minimum for correct visualization may be located at values of about 350 cd/m², depending on circumstances. For example, the minimum for a daytime environment with indirect light would be about 1500 cd/m², with a maximum of 8000 cd/m². Fig. 5 shows a detail of an LED screen -4-, the pixel pitch -h- being indicated in the enlarged detail.

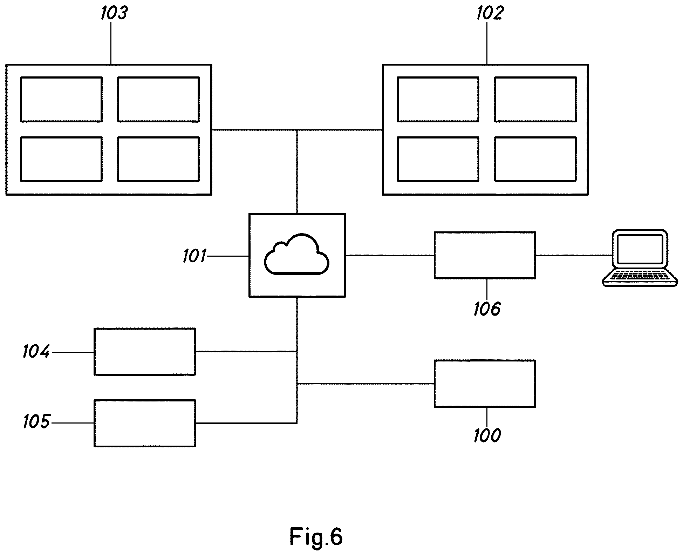

Fig. 6 shows a communications scheme usable for a device according to the present invention. A scheme that proves safe and stable is shown. The scheme shown is a closed communication system between the three main actors: product selection element -104-, server for holographic content communication and downloading (hereinafter, server -103-) and holographic device -100-.

In particular, the product selection element may be local and may be located integrally in the user interface, for example associated with the touch screen -3-, or else may be combined with a remote server -102- that has the elements to be shown on the screen, as well as optionally user data, if it is a customer who has registered previously. The holographic element -100- may be a control device of the projector -4-, and generally is located in the same location as the holographic device according to the present invention. The scheme is completed with a sensor for capturing user information, for example a camera -105- located on or near the user interface, which communicates with a facial recognition module -106-, which may be available in the device or remotely. In the scheme shown in the figure, all the communications are effected via the Internet -101-.

The communication starts from the selector -104- when the user navigates through the application, optionally downloading information from the remote server -102-. Once the user has selected a set of garments to be shown, this information is sent to the server -103-. The server -103- communicates what must be shown to the holographic device -100-. The contents to be shown are downloaded from the server to the holographic device -100-. The holographic contents are processed for correct reproduction. This process is repeated each time the user makes a product selection.

The device may be provided with sensors for capturing user information and adjusting the contents shown to the user. It is possible to select the garments to be shown (for example those corresponding to the detected sex of the user), or the garments to be shown first (for example as a function of a particular age from a captured user image). Both the sex and the age of the model showing the garment or combination of garments selected may change as a function of the user information. This type of sensor may be, for example, a camera -105- located on or near the touch screen, combined with a facial recognition module -106-.

Although the invention has been presented and described with reference to embodiments thereof, it will be understood that these do not limit the invention, therefore many design details or other details could be variable, which would be obvious to a person skilled in the art after interpreting the subject matter that is disclosed in the present description, claims and drawings. Thus, all variants and equivalents are included within the scope of the present invention if they may be considered to be included within the wider scope of the following claims.

## Claims

1. Model device for commercial establishments, of the type that comprises a device of the holographic type and a user interface, the device of the holographic type and the interface being connected together, **characterized in that** the device comprises a source of visible light connected to a control device for emitting a holographic recording, the source of visible light having a luminosity of between 250 and 8000 cd/m² and a distance between pixels (pixel pitch) less than 7 mm, that emits to a screen that is both transparent and reflective located obliquely relative to the light source, and **in that** the control device is connected to the interface, in such a way that the holographic recording to be emitted is selected as a function of a command sent from the user interface.

2. Device according to claim 1, **characterized in that** the luminosity is greater than 1500 cd/m².

3. Device according to claim 1 or 2, **characterized in that** the light source has a pixel pitch greater than or equal to 0.25 mm.

4. Device according to claim 2, **characterized in that** the pixel pitch is between 3 and 2 mm.

5. Device according to any one of the preceding claims, **characterized in that** the light source is an LED screen.

6. Device according to any one of the preceding claims, **characterized in that** it comprises a box in which the screen is located, leaving at least one side of the box open that faces the user interface.

7. Device according to the preceding claim, **characterized in that** the box has three-dimensional decorative elements, with the screen in an intermediate position between the three-dimensional decorative elements and the user interface.

8. Device according to claim 6 or 7, **characterized in that** the dimensions of the box are at least 200 cm high by 150 cm wide.

9. Device according to the preceding claim, **characterized in that** the dimensions of the box are at least 300 cm high, 250 cm wide and 250 cm deep.

10. Device according to any one of the preceding claims, **characterized in that** the screen is positioned at an angle of between 20º and 70º relative to the direction of projection of the holographic recording.

11. Device according to the preceding claim, **characterized in that** the screen is positioned at an angle of 45º relative to the direction of projection of the holographic recording.

12. Device according to any one of the preceding claims, **characterized in that** the screen is a colourless or coloured glass panel.

13. Device according to the preceding claim, **characterized in that** the transparent layer is located on the side opposite the user interface.

14. Device according to any one of the preceding claims, **characterized in that** the thickness of the screen is between 3.5 and 12 mm.

15. Device according to any one of the preceding claims, **characterized in that** the user interface is a touch screen.

16. Device according to the preceding claim, **characterized in that** the touch screen is incorporated in a shop window display.

17. Device according to claim 15 or 16, **characterized in that** the user interface comprises a selector module configured to allow the user to select a combination of articles of clothing from the selection of individual garments, selection of the combination generating a command for emission of a holographic recording comprising the emission of a model wearing the aforementioned combination of garments.

18. Device according to any one of the preceding claims, **characterized in that** the user interface comprises a product to be sold and a sensor of the presence of the product, the interface being configured in such a way that detection or non-detection of said product generates a command for emission of a holographic recording.

19. Device according to any one of the preceding claims, **characterized in that** it is connected remotely to a hologram server that comprises the holographic recordings to be emitted, said recordings being sent in response to a command from the device.

20. Device according to any one of the preceding claims, **characterized in that** it is connected remotely to a product server, which supplies data on selectable products to the user interface.
